# EUROPÄISCHE PATENTSCHRIFT

(11) **EP 1 252 506 B1**
(45) Veröffentlichungstag und Bekanntmachung des Hinweises auf die Patenterteilung: **25.06.2008**
(21) Anmeldenummer: 01911502.1
(22) Anmeldetag: 19.01.2001
(51) Int. Cl.: G01N 27/22

(54) **VERFAHREN UND VORRICHTUNG ZUR IDENTIFIKATION VON IN EINER TRÄGERFLÜSSIGKEIT VORHANDENEN MOLEKÜLEN**
METHOD AND DEVICE FOR IDENTIFYING MOLECULES PRESENT IN A CARRIER LIQUID
PROCEDE ET DISPOSITIF D'IDENTIFICATION DE MOLECULES PRESENTES DANS UN LIQUIDE VECTEUR

(30) Priorität: 21.01.2000 DE 10002597
(43) Veröffentlichungstag der Anmeldung: 30.10.2002
(73) Patentinhaber: Infineon Technologies AG, 81669 München (DE)
(72) Erfinder: SEWALD, Dieter, 9434 Au/SG (CH)
(74) Vertreter: Ginzel, Christian
(86) Internationale Anmeldenummer: PCT/EP2001/000583
(87) Internationale Veröffentlichungsnummer: WO 2001/053816

(56) Entgegenhaltungen:
- WO-A-95/34808
- WO-A-99/39190
- DE-A- 2 558 588
- US-A- 5 631 553
- US-A- 5 807 272

## Beschreibung

Die vorliegende Erfindung betrifft ein Verfahren und eine Vorrichtung zur Identifikation von in einer Trägerflüssigkeit vorhandenen Molekülen, bei denen sich die Trägerflüssigkeit in einer Behälteranordnung befindet, die mit zwei Elektroden versehen ist.

In der chemischen und pharmazeutischen Industrie zeichnet sich für die Zukunft ein großer Bedarf ab, Aussagen über die Analyse und Synthese organischer Substanzen im großtechischen Stil und in kürzester Zeit treffen zu können. Solche Aussagen können sich allein auf das Vorhandensein bestimmter Substanzen in einer Trägerflüssigkeit beschränken, oder Informationen über die Höhe der Ausbeute bzw. den zeitlichen Verlauf einer Reaktion zwischen Molekülen liefern.

Von großem Interesse scheinen hier auch Biosensoren zu sein, bei denen auf die Auswertung von elektronischen und physikalischen Größen als Indikatoren zurückgegriffen wird, um die gewünschten Informationen zu bekommen. Prozeßtechnisch gibt es hierzu Ansätze von matrixartigen Anordnungen mikroelektronisch integrierter Sensoren, die als Interface zwischen den organischen Substanzen und verschiedenen elektronischen Meßverfahren eingesetzt werden.

Da dieses Thema im Zusammenhang mit zwei sehr unterschiedlichen wissenschaftlichen Disziplinen steht, läßt gerade die mikroelektronische Meßtechnik noch erhebliches Innovationspotential vermuten.

Für diese Art von Biosensorik werden gemäß dem Stand der Technik überwiegend Meßverfahren vorgeschlagen, die auf der Änderung einer klassischen elektrischen Größe beruhen.

Hierzu einige Beispiele:
- Änderung des Stromflusses über eine interdigitale Elektrodenstruktur mit der Reaktionszeit von Molekülen.
   Problematik: Es müssen Ströme im nA-Bereich gemessen werden, die für unterschiedliche Messungen mit stark unterschiedlichen Offsetströmen versehen sind. Es folgen daraus erhebliche Anforderungen an die Empfindlichkeit des Systems, also notwendigerweise wird eine starke Wirkung einer organischen Reaktion auf die zu messende Größe benötigt.
   Außerdem ist dieses Verfahren nicht geeignet für Mehrdeutigkeiten, kann also für ein Gemisch an Molekülen, das mehr als genau eine definierte Reaktion zuläßt, nicht eingesetzt werden: Es kann jeweils nur der Stromfluß ausgewertet werden, aber nicht, ob Molekül A mit B oder A mit C reagiert hat.
- Änderung des Leitwertes bzw. des Wirk- und Blindwiderstandes an einem bioelektronischen Interface mit der Reaktionszeit von Molekülen.
   Problematik: Auch diese Meßmethode hat nur einen begrenzten Dynamikbereich, da die Wirkung einer biochemischen Reaktion auf das Meßsignal nicht beliebig groß gewählt werden kann. Wieder müssen Reaktionen in einem sehr definierten Ablauf stattfinden, weil auch dieses Meßverfahren kaum brauchbare Informationen für mehrdeutige Reaktionen liefert.
- Messung einer Kapazitätsänderung an einem bioelektronischem Interface.

Problematik: Die parasitären Kapazitäten einer Elektrodenstruktur können in einer ähnlichen Größenordnung liegen wie die auszuwertende Kapazitätsänderung. Dies limitiert hier den Einsatz dieser Methoden in der Empfindlichkeit. Die Beschränkung auf eindeutige Reaktionen trifft auch hier zu.

Es ist bekannt (US-A-4,765,179) ein Verfahren zur Messung der Konzentration von in einer Trägerflüssigkeit vorhandenen Molekülen, bei dem die Trägerflüssigkeit in eine Behälteranordnung gebracht wird, mit zwei Elektroden, wobei die zwei Elektroden mit elektrischer Hochfrequenzenergie beaufschlagt werden.

Es ist daher Aufgabe der vorliegenden Erfindung, ein Verfahren und eine Vorrichtung zur Identifikation von in einer Trägerflüssigkeit vorhandenen Molekülen anzugeben, welches eine wesentlich höhere Empfindlichkeit aufweist.

Erfindungsgemäß wird diese Aufgabe durch ein Verfahren gelöst, bei dem die Elektroden mit elektrischer Hochfrequenzenergie beaufschlagt werden, deren Frequenz über einen weiten Bereich verändert wird, und die Moleküle anhand ihrer Absorptionsresonanzfrequenzen identifiziert werden.

Vorzugsweise kann dabei auch anhand der Stärke der Absorption die Menge der identifizierten Moleküle bestimmt werden.

Eine günstige Möglichkeit ist dabei die Bestimmung der Absorption durch Transmissionsmessung.

Ebenso ist die Bestimmung der Absorption durch Reflexionsmessung möglich.

Zusätzlich kann die Phaseninformation ausgewertet werden.

Die bevorzugte Trägerflüssigkeit ist destilliertes Wasser, da dieses eine sehr hohe Resonanzfrequenz von 22 GHz aufweist, die sehr weit von den Resonanzfrequenzen der zu identifizierenden Moleküle entfernt liegt.

Besonders günstig kann die Absorption mittels der S-Parameterwerte bestimmt werden.

Zur Überwachung des zeitlichen Verlaufs einer Reaktion ist es erfindungsgemäß besonders bevorzugt, daß die Reaktion in der Trägerflüssigkeit in der Behälteranordnung abläuft, und der zeitliche Verlauf anhand der Veränderung der Resonanzspektren über die Zeit ermittelt wird.

Zur Feststellung des Ergebnisses einer Reaktion ist es erfindungsgemäß besonders bevorzugt, daß aus der Auswertung der Resonanzspektren festgestellt wird, wie hoch die Ausbeute für das Reaktionsprodukt ist, welcher Restanteil von den ursprünglichen Reaktionspartnern übriggeblieben ist, und ob zusätzliche unerwünschte Reaktionsprodukte entstanden sind.

Vorzugsweise kann eine Vielzahl von Messungen an verschiedenen Proben parallel im Zeitmultiplex durchgeführt werden.

Vorzugsweise kann die Behälteranordnung und die Elektroden in CMOS-Technologie realisiert werden. Dadurch läßt sich die gesamte Schaltung einschließlich der elektronischen Komponenten besonders günstig auf einem einzigen Chip integrieren.

Es ist dabei besonders bevorzugt, daß die an den Elektroden der Behälteranordnung gemessenen Hochfrequenzsignale vor einer Weiterverarbeitung einer Mischerschaltung zur Herabsetzung der Frequenz zugeführt werden. Niedrigere Frequenzen können dann entsprechend leichter verarbeitet werden.

Die erfindungsgemäße Aufgabe wird auch durch eine Vorrichtung gelöst, bei der die Elektroden mit einem durchstimmbaren Hochfrequenzoszillator und einer Auswerteschaltung verbunden sind.

Es ist dabei besonders bevorzugt, daß zwischen den Elektroden und der Auswerteschaltung eine Mischerschaltung zur Herabsetzung der Frequenz angeordnet ist. Dadurch wird die Weiterverarbeitung auf niedrigerem Frequenzniveau erheblich vereinfacht.

Vorzugsweise umfaßt die Auswerteschaltung einen A-D-Wandler und eine Recheneinheit.

Als Recheneinheit kann dabei vorzugsweise ein Signalprozessor oder Microcontroller eingesetzt werden.

Vorzugsweise kann die Vorrichtung aus einer matrixartigen integrierten Anordnung von einer Vielzahl von Behälteranordnungen aufgebaut sein. Auf diese Weise kann eine Vielzahl von Messungen parallel durchgeführt werden.

Die bevorzugte Technologie zur Herstellung der erfindungsgemäßen Vorrichtung ist die CMOS-Technologie.

Im folgenden wird die Erfindung anhand des in den Zeichnungen dargestellten Ausführungsbeispiels näher erläutert. Es zeigt:
- Fig. 1: eine Prinzipdarstellung des erfindungsgemäßen Hochfrequenzspektroskopieverfahrens;
- Fig. 2: das Prinzip der S-Parametermeßmethode;
- Fig. 3: einen exemplarischen Plot einer erfindungsgemäßen spektroskopischen Messung;
- Fig. 4: ein Beispiel für Molekülresonanzen vor einer Reaktion;
- Fig. 5: die Molekülresonanzen während des Verlaufs der Reaktion;
- Fig. 6: die Molekülresonanzen gegen Ende der Reaktion; und
- Fig. 7: einen möglichen Aufbau einer erfindungsgemäßen Messzelle und der zugehörigen Signalverarbeitung.

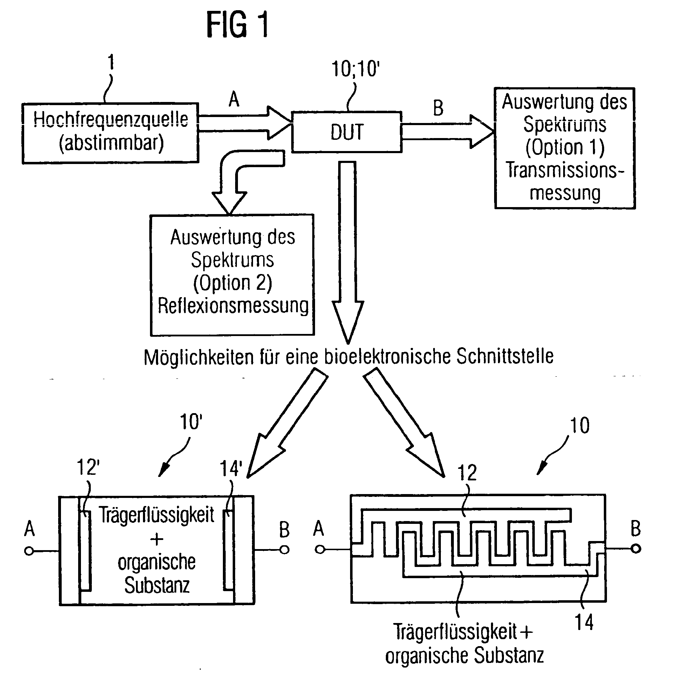

In Fig. 1 wird das Funktionsprinzip der vorliegenden Erfindung dargestellt: In einem hochfrequzenzspektroskopischen Verfahren erzeugt eine Hochfrequenzquelle Leistung in geringer Höhe und wird dabei für einen Meßzyklus über einen möglichst breiten Frequenzbereich abgestimmt.

Als "device under test" (DUT) eignet sich eine Behälteranordnung, die mit Trägerflüssigkeit gefüllt und mit zwei Elektroden versehen ist, die so dimensioniert sind, daß Leistung von Anschluß A nach B möglichst verlustfrei unter den gegebenen Bedingungen übertragen werden kann. Destilliertes Wasser (H₂O) z.B. kann eine solche Trägerflüssigkeit sein, weil dessen Molekülgröße entsprechend klein ist.

Wird das DUT mit Hochfrequenzenergie versehen, so sind abhängig von der Größe der Moleküle, die sich im Behälter befinden Absorptionsresonanzen innerhalb eines betrachteten Frequenzbereichs zu erwarten. Der Mechanismus dahinter beruht auf der Aufnahme von Hochfrequenzleistung durch die Moleküle bei bestimmten Resonanzfrequenzen. Für Wasser liegt diese Frequenz z.B. bei ca. 22 GHz, wie aus Skolnik, Introduction to Radar Systems, 1980, McGraw-Hill bekannt ist. Die Hochfrequenzleistung dieser bestimmten Frequenz bringt die Wassermoleküle in Rotation und wird dabei in Wärme umgewandelt. Diese Leistung wird im DUT verbraucht und daher weder reflektiert noch übertragen.

Organische Substanzen bestehen im Gegensatz dazu aus verhältnismäßig großen Molekülen (z.B. DNA, Hämoglobin, etc.). Im Vergleich zum Wassermolekül wird daher eine Molekülresonanz bei sehr viel tieferen Frequenzen auftreten und kann damit von der Resonanz dieser Trägerflüssigkeit auch nicht überschattet werden. Art und Lage einer Resonanz ist sicherlich von Faktoren wie Molekülgröße, Polarität des Moleküls und Bindung an die Trägerflüssigkeit abhängig, ist also substanzspezifisch.

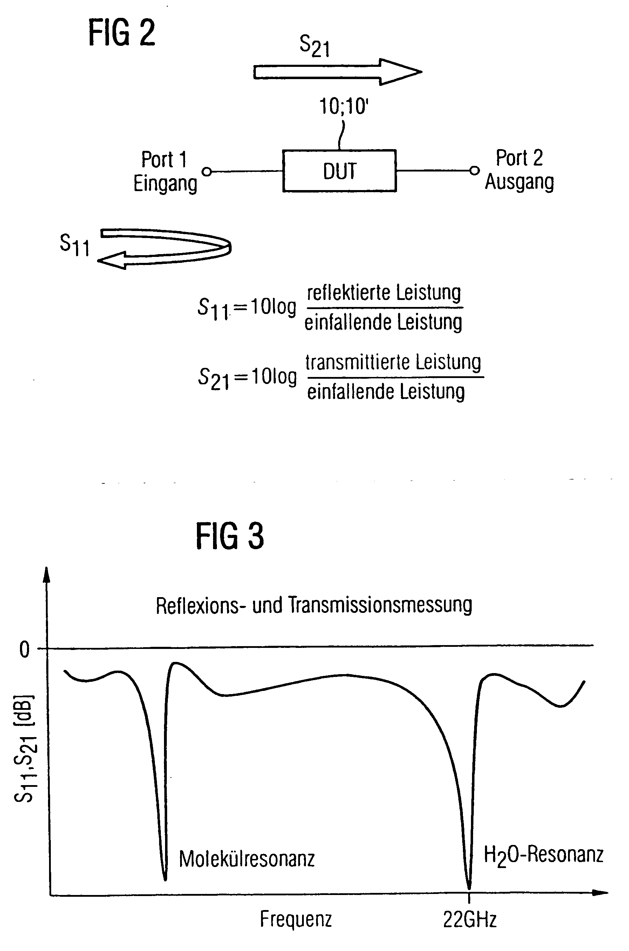

Das erfindungsgemäße Verfahren kann in zwei Modi betrieben werden, als Transmissions- und als Reflexionsmessung. Im ersten Fall wird die vom DUT übertragene Leistung innerhalb eines Frequenzbereichs gemessen. Diese wird für den Fall von Molekülresonanzen entsprechend niedriger sein. Im zweiten Fall wird die vom DUT reflektierte Leistung erfaßt, die ebenfalls im Resonanzfall minimal ist, da ein Großteil der Leistung von den Molekülen absorbiert wird. Zusätzlich zur Höhe der Leistungspegel kann auch die Phaseninformation ausgewertet werden. Größen zur Leistungsbetrachtung sind in der klassischen Hochfrequenzmeßtechnik vorwiegend S-Parameter (Definition sh. Fig. 2). In Fig. 3 wird daher darauf Bezug genommen.

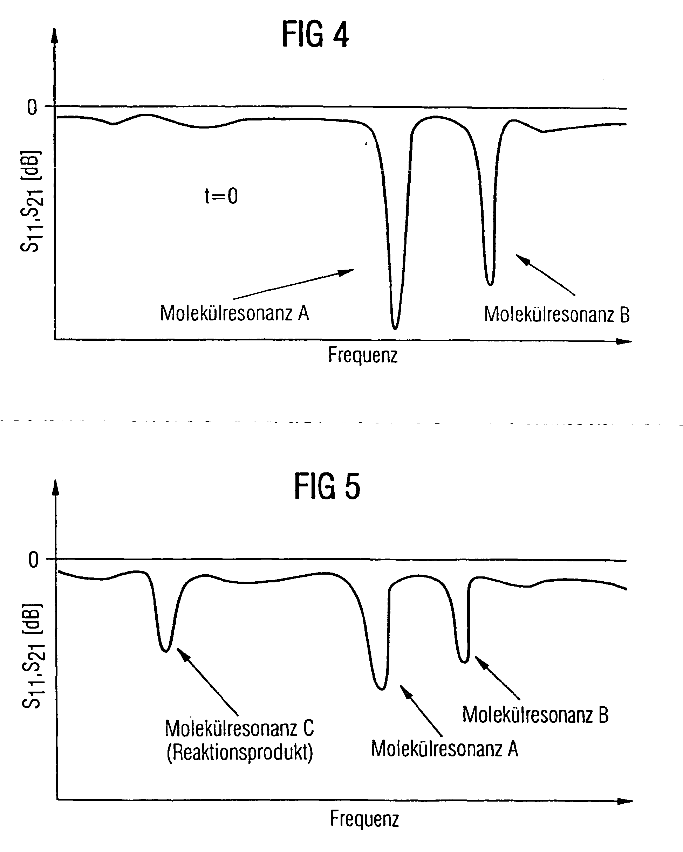

Die Fig. 4 bis 6 sollen ein denkbares Meßszenario für den zeitlichen Ablauf einer Reaktion zweier Moleküle A und B beschreiben:

Zum Zeitpunkt t=0 befinden sich im DUT zwei Substanzen mit unterschiedlicher molekularer Zusammensetzung, eine Reaktion hat noch nicht stattgefunden (Fig. 4). Molekül A weist eine stärkere Resonanz als Molekül B auf, es scheint also in höherer Konzentration vorhanden zu sein.

Im Verlauf der Reaktion verringert sich die Konzentration für beide Substanzen, es bildet sich das Reaktionsprodukt. Dieses hat sicherlich ein höheres Molekulargewicht als die Ausgangsstoffe, seine spektrale Resonanz liegt also bei einer niedrigeren Frequenz, wie in Fig. 5 dargestellt.

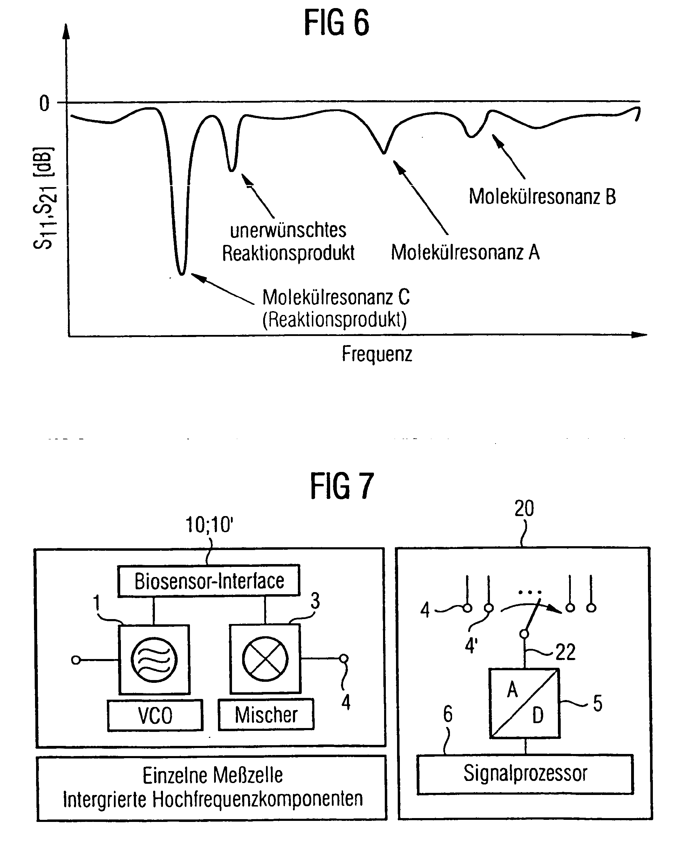

Nach Abschluß der Reaktion (Fig. 6) kann aus dem spektralen Plot ermittelt werden, wie hoch die Ausbeute für Molekül C ist, welcher Restanteil von Molekül A und B übriggeblieben ist, und ob zusätzliche unerwünschte Reaktionsprodukte entstanden sind.

Die Dauer einer solchen biochemischen Reaktion ist in der Regel um Größenanordnungen höher als die benötigte Zeit für einen Meßzyklus (ms Bereich). Es bietet sich an, eine Vielzahl von Messungen an verschiedenen Proben parallel durchzuführen.

Ein entscheidender Vorteil des erfindungsgemäßen Verfahrens gegenüber den bekannten Meßprinzipien liegt in einem sehr hohen Dynamikbereich, da in der Hochfrequenzmeßtechnik bekanntlich Pegel über mehrere Dekaden (LOG-Maßstab: dB) gemessen werden können. Der Biosensor weist also eine entsprechend hohe Empfindlichkeit auf. Zusätzlich erreicht man mit dieser Art der Meßtechnik die Möglichkeit, unterschiedliche Substanzen aufzulösen, d.h. Resonanzen im Spektrum mehreren Substanzen zuordnen zu können.

Speziell für eine mikroelektronische Ausführungsform dieser Methode ist die Transmissionsmessung zu bevorzugen, da die Probenbehälter hier sehr kleine Abmessungen haben können und diese Art der Messung bessere Resultate erwarten läßt.

Um in kurzer Zeit und im großtechnischen Stil Auswertungen machen zu können, ist eine matrixartig integrierte Anordnung von Probenbehältern denkbar. Ein möglicher Aufbau einer Einzelzelle, wie er in Fig. 7 dargestellt ist, besteht aus einem breitbandig abstimmbaren VCO1 (spannungsgesteuertem Oszillator) als Hochfrequenzquelle, einem biosensorischen Interface 10 oder 10', wie es z.B. in Fig. 1 im Detail gezeigt wird, und einer Mischerschaltung 3, die eine Frequenzumsetzung des gemessenen Hochfrequenzsignals zu tieferen, leichter zu verarbeitenden Frequenzen bewirkt. Auf diese Weise ist sichergestellt, daß alle Hochfrequenzkomponenten und -leitungsführungen integriert sind, was Aufwand und Kosten gering hält. Wegen der immer besser werdenden Hochfrequenzeigenschaften neuer Prozeßgenerationen könnte diese Anordnung in CMOS-Technologie realisiert werden.

Die Signale der Einzelzellen könnten parallel oder im Multiplexbetrieb erfaßt und von einem A-D-Wandler 5 digitalisiert werden. Eine Rechnereinheit 6 (Signalprozessor, Microcontroller) bearbeitet die Signale, berechnet aus den Zeitdaten das Spektrum und übernimmt die Ansteuerung der Einzelzellen.

Im folgenden wird die vorliegende Erfindung im einzelnen anhand der Zeichnungen erläutert:

Wie in Fig. 1 dargestellt, wird die entsprechende Behälteranordnung, die die Trägerflüssigkeit und die zu untersuchenden Moleküle enthält, als "device under test" (DUT) 10; 10' bezeichnet. Auf dieses DUT 10; 10' wirkt Hochfrequenzenergie aus einer abstimmbaren Hochfrequenzquelle 1, beispielsweise einem spannungsgesteuerten Oszillator ein. Dabei kann nun entweder eine Transmissionsmessung (als Option 1 bezeichnet) oder eine Reflexionsmessung (als Option 2 bezeichnet) durchgeführt werden. Je nach Technologie und Konzentration der Moleküle in der Trägerflüssigkeit kann entweder eine Behälteranordnung gemäß 10' gewählt werden, bei der sich in einem quader- oder zylinderförmigen Behälter an den beiden Stirnflächen jeweils eine Elektrode 12'; 14' befindet und dazwischen die Trägerflüssigkeit und die organische Substanz angeordnet sind, oder es kann eine flächige Anordnung der Elektroden wie in der Behälteranordnung 10 gewählt werden, bei der die beiden Elektroden 12, 14 wie Kämme ineinander greifen und die Trägerflüssigkeit mit den darin enthaltenen organischen Substanzen diese kammförmigen Strukturen überdeckt.

Das entsprechende Hochfrequenzmessverfahren ist in Fig. 2 dargestellt. Es kann entweder bei der Reflexionsmessung die am Eingang des DUT 10; 10' reflektierte Hochfrequenzleistung durch die einfallende Leistung geteilt werden. Der Meßwert für das entsprechende Absorptionsspektrum wird dabei vorzugsweise als 10er-Logarithmus dieses Verhältnisses dargestellt, so daß sich die in Fig. 2 als S₁₁ dargestellte Formel ergibt.

Meist ergibt sich eine einfachere meßtechnische Handhabung, wenn die vom DUT 10; 10' durchgelassene Leistung in das Verhältnis zur einfallenden Leistung gesetzt wird. Auch hier werden die Spektren als 10er-Logarithmus dieses Verhältnisses dargestellt, so daß sich die in Fig. 2 für S₂₁ dargestellte Formel ergibt.

Die Fig. 3 zeigt eine exemplarische Darstellung einer solchen spektroskopischen Messung. Interessanterweise sind die Ergebnisse bei Reflexions- und Transmissionsmessung je nach Auslegung der entsprechenden Elektroden im wesentlichen ähnlich, da die entsprechenden Resonanzen bei den jeweiligen Frequenzen sowohl zu einer Verringerung der reflektierten als auch zu einer Verringerung der durchgelassenen Leistung führen. Deutlich ist die Resonanz für die Trägerflüssigkeit Wasser bei 22 GHdz sowie eine auf wesentlich niedrigerer Frequenz liegende Molekülresonanz zu erkennen. Die dargestellte Kurve ergibt sich, wenn nur eine Art von Molekülen in der Trägerflüssigkeit Wasser vorhanden ist.

In der praktischen Anwendung wird das erfindungsgemäße Verfahren und die erfindungsgemäße Vorrichtung jedoch in den meisten Fällen zur Überwachung einer Reaktion herangezogen. Es ergeben sich dann die in den Figuren 4 bis 6 dargestellten Resonanzkurven. In den Figuren 4 bis 6 sind lediglich niedrigere Frequenzen dargestellt, so daß die Resonanz der Trägerflüssigkeit Wasser nicht mehr abgebildet ist.

Der Ausgangszustand einer Reaktion zum Zeitpunkt t=0 ist in Fig. 4 dargestellt. Deutlich sichtbar sind die beiden Molekülresonanzen A und B der beiden Reaktionspartner A und B.

Fig. 5 zeigt den Zustand während des Ablaufs der Reaktion. Die Molekülresonanzen für die Moleküle A und B sind inzwischen verringert, da diese teilweise durch die Reaktion verbraucht worden sind. Demgegenüber tritt eine neue Molekülresonanz C bei erheblich niedrigerer Frequenz auf. Es handelt sich dabei um die Molekülresonanz des Reaktionsprodukts C. Im vorliegenden Fall wird dabei davon ausgegangen, daß eine Reaktion vorliegt, bei der sich im wesentlichen die Moleküle A und B zur Bildung eines größeren Moleküls C zusammenschließen.

Fig. 6 zeigt den Endzustand nach Abschluß der Reaktion. Die Molekülresonanzen A und B sind stark verringert, da diese Moleküle im wesentlichen durch die Reaktion aufgebraucht worden sind. Die Molekülresonanz C, die das Reaktionsprodukt darstellt, ist nunmehr sehr stark ausgeprägt. Daneben zeigt sich noch eine weitere schwächere Resonanz, bei etwas höherer Frequenz. Diese zeugt davon, daß ein unerwünschtes Reaktionsprodukt mit geringerer Molekülgröße ebenfalls entstanden ist.

Fig. 7 zeigt schließlich den Aufbau, wie er für eine technisch anwendbare Ausführungsform der Erfindung zu wählen ist. Hierbei soll zunächst die auf der linken Seite der Fig. 7 dargestellte einzelne Meßzelle beschrieben werden. Diese umfaßt einen spannungsgesteuerten Oszillator 1, der die notwendige Hochfrequenzenergie erzeugt und diese dem DUT 10; 10' zuführt. Diese ist hier als Biosensor-Interface bezeichnet. Der Aufbau dieses Biosensor-Interfaces kann entsprechend den beiden Ausführungsformen der Fig. 1 unten-gebildet sein.

Der Ausgang des Biosensor-Interfaces 10; 10' ist hier mit einem Hochfreqenzmischer 3 verbunden, durch den die Frequenz herabgesetzt und einem Ausgangsanschluß 4 zugeführt wird.

Alle Komponenten einer solchen Einzelzelle können in CMOS-Technologie auf einem Chip integriert werden. Darüber hinaus kann eine Vielzahl solcher Einzelzellen in einer Anordnung auf einem Chip integriert werden. Die einzelnen Ausgänge 4 der einzelnen Meßzellen sind dann einem Multiplexer 22 zugeführt, der die einzelnen Ausgänge 4, 4' usw. mit einem Analog-digital-Wandler 5 verbindet, der wiederum mit einem Signalprozessor 6 verbunden ist. Auch diese Schaltungskomponenten können auf dem Chip integriert sein.

Für die Integration auf dem Chip eignet sich am besten die CMOS-Technologie.

## Patentansprüche

1. Verfahren zur Identifikation von in einer Trägerflüssigkeit vorhandener Moleküle, bei dem die Trägerflüssigkeit in eine Behälteranordnung (10) gebracht wird, die mit zwei Elektroden (12,14) versehen wird, **dadurch gekennzeichnet, daß** die Elektroden (12,14) mit elektrischer Hochfrequenzenergie beaufschlagt werden, deren Frequenz über einen weiten Bereich verändert wird, und die Moleküle anhand ihrer Absorptionsresonanzfrequenzen identifiziert werden.

2. Verfahren nach Anspruch 1, **dadurch gekennzeichnet, daß** anhand der Stärke der Absorption die Menge der identifizierten Moleküle bestimmt wird.

3. Verfahren nach Anspruch 1 oder 2, **dadurch gekennzeichnet, daß** die Absorption durch Transmissionsmessung bestimmt wird.

4. Verfahren nach Anspruch 1 oder 2, **dadurch gekennzeichnet, daß** die Absorption durch Reflexionsmessung bestimmt wird.

5. Verfahren nach einem der Ansprüche 1 bis 4, **dadurch gekennzeichnet, daß** zusätzlich die Phaseninformation ausgewertet wird.

6. Verfahren nach einem der Ansprüche 1 bis 5, **dadurch gekennzeichnet, daß** destilliertes Wasser (H₂O) als Trägerflüssigkeit verwendet wird.

7. Verfahren nach einem der Ansprüche 1 bis 6, **dadurch gekennzeichnet, daß** die Absorption durch S-Parameterwerte bestimmt wird.

8. Verfahren nach einem der Ansprüche 1 bis 7 zur Überwachung des zeitlichen Verlaufs einer Reaktion, **dadurch ge-kennzeichnet**, daß die Reaktion in der Trägerflüssigkeit in der Behälteranordnung abläuft, und der zeitliche Verlauf anhand der Veränderung der Resonanzspektren über die Zeit ermittelt wird.

9. Verfahren nach einem der Ansprüche 1 bis 7, zur Feststellung des Ergebnisses einer Reaktion, **dadurch gekennzeichnet, daß** aus der Auswertung der Resonanzspektren festgestellt wird, wie hoch die Ausbeute für das Reaktionsprodukt ist, welcher Restanteil von den ursprünglichen Reaktionspartnern übriggeblieben ist, und ob zusätzliche unerschwünschte Reaktionsprodukte entstanden sind.

10. Verfahren nach einem der Ansprüche 1 bis 9, **dadurch gekennzeichnet, daß** eine Vielzahl von Messungen an verschiedenen Proben parallel im Zeitmultiplex durchgeführt werden.

11. Verfahren nach einem der Ansprüche 1 bis 10, **dadurch gekennzeichnet, daß** die Behälteranordnung und die Elektroden in CMOS-Technologie realisiert werden.

12. Verfahren nach einem der Ansprüche 1 bis 11, **dadurch gekennzeichnet, daß** die an den Elektroden der Behälteranordnung gemessenen Hochfrequenzsignale vor einer Weiterverarbeitung einer Mischerschaltung zur Herabsetzung der Frequenz zugeführt werden.

13. Vorrichtung zur Identifikation von in einer Trägerflüssigkeit vorhandenen Molekülen mit einer Behälteranordnung für die Trägerflüssigkeit, die mit zwei Elektroden versehen ist, wobei die Elektroden (12,14; 12',14') mit einem durchstimmbaren Hochfrequenzoszillator (1) und einer Auswerteschaltung (20) verbunden sind, **dadurch gekennzeichnet, dass** die Auswerteschaltung (20) eingerichtet ist zum Identifizieren der Moleküle anhand ihrer Absorptionsresonanzfrequenzen.

14. Vorrichtung nach Anspruch 13, **dadurch gekennzeichnet, daß** zwischen den Elektroden (12,14;12',14') und der Auswerteschaltung (20) eine Mischerschaltung (3) zur Herabsetzung der Frequenz angeordnet ist.

15. Vorrichtung nach Anspruch 13 oder 14, **dadurch gekennzeichnet, daß** die Auswerteschaltung (20) einen A-D-Wandler (5) und eine Recheneinheit (6) umfaßt.

16. Vorrichtung nach Anspruch 15, **dadurch gekennzeichnet, daß** als Recheneinheit (6) ein Signalprozessor oder Microcontroller dient.

17. Vorrichtung nach einem der Ansprüche 13 bis 16, **dadurch gekennzeichnet, daß** sie aus einer matrixartigen integrierten Anordnung von einer Vielzahl von Behälteranordnungen (10,10') aufgebaut ist.

18. Vorrichtung nach einem der Ansprüche 13 bis 17, **dadurch gekennzeichnet, daß** sie in CMOS-Technologie aufgebaut ist.

## Claims

1. Method for the identification of molecules that are present in a carrier liquid, wherein the carrier liquid is placed in a container arrangement (10) which is provided with two electrodes (12, 14), **characterized in that** electrical radiofrequency energy whose frequency is varied over a wide range is applied to the electrodes (12, 14), and the molecules are identified on the basis of their absorption resonant frequencies.

2. Method according to Claim 1, **characterized in that** the amount of the identified molecules is determined on the basis of the strength of the absorption.

3. Method according to Claim 1 or 2, **characterized in that** the absorption is determined by transmission measurement.

4. Method according to Claim 1 or 2, **characterized in that** the absorption is determined by reflection measurement.

5. Method according to one of Claims 1 to 4, **characterized in that** the phase information is also evaluated.

6. Method according to one of Claims 1 to 5,
**characterized in that** distilled water (H₂O) is used as the carrier liquid.

7. Method according to one of Claims 1 to 6,
**characterized in that** the absorption is determined using S parameter values.

8. Method according to one of Claims 1 to 7 for monitoring the progress of a reaction as a function of time, **characterized in that** the reaction takes place in the carrier liquid in the container arrangement, and the progress as a function of time is ascertained on the basis of the time variation of the resonance spectra.

9. Method according to one of Claims 1 to 7, for establishing the result of a reaction, **characterized in that** the evaluation of the resonance spectra is used to establish how high the yield is for the reaction product, what residual fraction of the original reaction partners is left over, and whether additional unwanted reaction products have been formed.

10. Method according to one of Claims 1 to 9, **characterized in that** a plurality of measurements are carried out in parallel on various samples as a time division multiplex.

11. Method according to one of Claims 1 to 10, **characterized in that** the container arrangement and the electrodes are produced in CMOS technology.

12. Method according to one of Claims 1 to 11, **characterized in that** the radiofrequency signals measured at the electrodes of the container arrangement are sent to a mixer circuit for lowering the frequency prior to further processing.

13. Device for the identification of molecules that are present in a carrier liquid with a container arrangement for the carrier liquid, which is provided with two electrodes, the electrodes (12, 14; 12', 14') being connected to a tunable radiofrequency oscillator (1) and an evaluation circuit (20), **characterized in that** the evaluation circuit (20) is equipped to identify the molecules on the basis of their absorption resonant frequencies.

14. Device according to Claim 13, **characterized in that** a mixer circuit (3) for lowering the frequency is arranged between the electrodes (12, 14; 12', 14') and the evaluation circuit (20).

15. Device according to Claim 13 or 14,
**characterized in that** the evaluation circuit (20) comprises an A/D converter (5) and a computation unit (6).

16. Device according to Claim 15, **characterized in that** a signal processor or microcontroller is used as the computation unit (6).

17. Device according to one of Claims 13 to 16, **characterized in that** it is constructed from a matricial integrated arrangement of a plurality of container arrangements (10, 10').

18. Device according to one of Claims 13 to 17, **characterized in that** it is constructed in CMOS technology.

## Revendications

1. Procédé d'identification de molécules présentes dans un liquide porteur, dans lequel on met le liquide porteur dans un dispositif (10) à récipient, qui est muni de deux électrodes (12, 14), **caractérisé en ce que** l'on alimente les électrodes (12, 14) en une énergie électrique à haute fréquence, dont la fréquence est modifiée sur un grand intervalle et on identifie les molécules au moyen de leur fréquence de résonance d'absorption.

2. Procédé suivant la revendication 1, **caractérisé en ce que** l'on détermine la quantité des molécules identifiées au moyen de l'intensité de l'absorption.

3. Procédé suivant la revendication 1 ou 2,
**caractérisé en ce que** l'on détermine l'absorption par une mesure de transmission.

4. Procédé suivant la revendication 1 ou 2,
**caractérisé en ce que** l'on détermine l'absorption par une mesure de réflexion.

5. Procédé suivant l'une des revendications 1 à 4, **caractérisé en ce que** l'on exploite supplémentairement l'information de phase.

6. Procédé suivant l'une des revendications 1 à 5, **caractérisé en ce que** l'on utilise de l'eau (H₂O) distillée comme liquide porteur.

7. Procédé suivant l'une des revendications 1 à 6, **caractérisé en ce que** l'on détermine l'absorption par des valeurs du paramètre S.

8. Procédé suivant l'une des revendications 1 à 7 pour le contrôle du déroulement dans le temps d'une réaction, **caractérisé en ce que** la réaction se déroule dans le liquide porteur dans le dispositif à récipient et on détermine la courbe temporelle au moyen de la variation des spectres de résonance en fonction du temps.

9. Procédé suivant l'une des revendications 1 à 7 pour constater le résultat d'une réaction, **caractérisé en ce que** l'on constate, à partir de l'exploitation des spectres de résonance, la valeur du rendement en le produit de réaction, la proportion restante des partenaires de réaction d'origine et si des produits de réaction supplémentaires non souhaités se sont formés.

10. Procédé suivant l'une des revendications 1 à 9, **caractérisé en ce que** l'on effectue en parallèle et en multiplexage dans le temps une pluralité de mesures sur divers échantillons.

11. Procédé suivant l'une des revendications 1 à 10, **caractérisé en ce que** l'on réalise le dispositif à récipient et les électrodes en technologie CMOS.

12. Procédé suivant l'une des revendications 1 à 11, **caractérisé en ce que** l'on envoie les signaux de haute fréquence mesurés sur les électrodes du dispositif à récipient, avant un traitement ultérieur à un circuit mélangeur pour abaisser la fréquence.

13. Dispositif d'identification de molécules présentes dans un liquide porteur, comprenant un dispositif à récipient pour le liquide porteur qui est muni de deux électrodes, dans lequel les électrodes (12, 14 ; 12', 14') sont reliées à un oscillateur (1) de haute fréquence à fréquence variable et à un circuit (20) d'exploitation, **caractérisé en ce que** le circuit (20) d'exploitation est conçu pour l'identification de molécules au moyen de leur fréquence de résonance d'absorption.

14. Dispositif suivant la revendication 13,
**caractérisé en ce qu'**un circuit (3) mélangeur pour abaisser la fréquence est monté entre les électrodes (12, 14 ; 12', 14') et le circuit (20) d'exploitation.

15. Dispositif suivant la revendication 13 ou 14,
**caractérisé en ce que** le circuit (20) d'exploitation comprend un convertisseur (5) analogique numérique et une unité (6) de calcul.

16. Dispositif suivant la revendication 15,
**caractérisé en ce que** l'unité (6) de calcul sert de processeur de signal ou de microdispositif de commande.

17. Dispositif suivant l'une des revendications 13 à 16, **caractérisé en ce qu'**il est formé d'un dispositif intégré en forme de matrice d'une pluralité de dispositifs (10, 10') à récipient.

18. Dispositif suivant l'une des revendications 13 à 17, **caractérisé en ce qu'**il est constitué en technologie CMOS.
